# EUROPEAN PATENT APPLICATION

(11) **EP 4 797 674 A1**
(43) Date of publication of application: **26.08.2026**
(21) Application number: 25305241.9
(22) Date of filing: 24.02.2025
(51) Int. Cl.: H04N 1/54, B41J 3/407

(54) **METHOD AND SYSTEM FOR DETERMINING AN OPTIMIZED SET OF INK COLOURS USED TO PRINT A PATTERN ON AN OBJECT**

(71) Applicant: Airbus SAS, 31700 Blagnac (FR); Airbus Operations SAS, 31060 Toulouse (FR); AIRBUS Operations GmbH, 21129 Hamburg (DE)
(72) Inventor: MAHLER, Fabian, 21129 HAMBURG (DE); MORINIERE, Boris, 17300 ROCHEFORT (FR); BÜRGY, Olivier, 31060 TOULOUSE (FR); LELEU, Samuel, 31060 TOULOUSE (FR)
(74) Representative: Gevers & Orès

(57) **Abstract**

- Method and system for determining an optimized set of ink colours used to print a pattern on an object
- The method comprises in particular steps implemented by a computer device for defining a plurality of sets of different colours in a colour space (19), each of which consists, on the one hand, of spot colours that make it possible to reproduce one or more sensitive colours (C6, C7) of the reference pattern to be printed continuously and exactly and, on the other hand, of process colours intended to be used to produce colour combinations, so as to be able to obtain all of the colours (C1, C2, C3, C4, C5) of the reference pattern to be printed, other than the one or more sensitive colours (C6, C7), in the livery, and for selecting one of these sets of colours taking into account at least one selection criterion, in order to obtain a set of colours that is optimized in particular in terms of precision and/or ink consumption.

## Description

### Technical field

The present invention relates to a method and system for determining an optimized set of different ink colours that are intended to be used to print at least one pattern on an object.

### Prior art

The present invention applies more particularly to the printing of representations of colours, texts, logos, images, artistic drawings, etc. on a three-dimensional object. This three-dimensional object may be large, such as an aircraft for example.

An aeronautical livery, in particular a livery of a civil transport aircraft, generally contains large areas of solid colours corresponding to the identification colours of the airline that will operate the aircraft. For such a livery, precise colorimetry of the colours is expected, in particular for identification colours.

One known painting process for obtaining such a livery requires meticulous preparation of the surface to be painted and tedious masking and unmasking steps, in addition to environmental constraints associated with manual or automatic paint application and challenging working conditions for operators.

Painting without masking using robot-driven digital printing makes it possible to solve the above problems. Such printing, called direct-to-shape printing (or DTS for short), is a printing technology that makes it possible to carry out printing directly on the three-dimensional surface of an object, regardless of its shape or texture.

The standard approach in the printing industry, and in particular in the context of direct-to-shape printing, to achieve a given colour is based on intelligent placement of differently sized dots of primary colours or spot colours, typically cyan, magenta, yellow and black. The printed colours obtained using this approach are commonly called "process colours". The use of just these primary colour inks limits the options for printable colours.

It may therefore be difficult to precisely achieve a specific colour (which must be reproduced precisely) with such process colours, in particular when implementing direct-to-shape printing, because a curvature of the object and/or path affects resolution and screening.

There is therefore a need to find a solution that makes it possible to maximize colour precision, that is to say that makes it possible to obtain, with great precision, the desired colours in the printing that is carried out, and also, if possible, to reduce or even minimize ink consumption.

### Summary of the invention

The present invention aims to propose such a solution. To this end, it relates to a method for determining an optimized set of N different ink colours that are intended to be used to print at least one pattern, referred to as a reference pattern, on an object.

According to the invention, said method comprises at least the sequence of the following steps:
- an analysis step, implemented by a computer device, for analysing colorimetric data relating to the reference pattern to be printed, in order to identify a set of colours to be printed;
- an identification step for identifying, among this set of colours, a number M of what are referred to as sensitive colours, M being an integer greater than or equal to 1;
- a determination step for determining, for each identified sensitive colour, what is referred to as a spot colour intended to reproduce the sensitive colour, and for entering each spot colour thus determined into the computer device;
- a definition step, implemented by the computer device, for defining a plurality of sets of colours, each of said sets of colours comprising N different colours consisting of said M spot colours and N-M colours referred to as elementary colours, at least the N-M elementary colours being intended to be used as process colours; and
- a selection step, implemented by the computer device, for selecting one of said sets of colours taking into account at least one selection criterion, the set of colours thus selected representing said determined optimized set.

In the context of the present invention, when colours are mentioned, this refers to ink colours (intended to be used for printing on an object).

Moreover, in the context of the present invention:
- a "sensitive colour" is understood to mean a colour that is to be reproduced precisely in the livery with respect to the pattern to be reproduced. In the case of printing on an aircraft, this may be a colour characteristic of the airline that will operate the aircraft;
- a "spot colour" is understood to mean a colour generated by an ink (which is pure or obtained from a mixture) that is printed in a single pass of a printing tool; and
- a "process colour" is understood to mean a colour that is combined with one or more other process colours so as to form a given colour. Such a given colour is produced by printing a series of dots of generally different process colours.

Thus, by virtue of the invention, in order to print a reference pattern, provision is made for a hybrid approach using:
- on the one hand, one or more spot colours that make it possible to reproduce (continuously) the one or more sensitive colours of the reference pattern to be printed exactly; and
- on the other hand, process colours intended to be used to produce colour combinations, via dot printing of process colours, in order to be able to obtain all of the colours (of the reference pattern) to be printed, other than the one or more sensitive colours, in the livery.

In addition, the process colours are selected using one or more particular selection criteria, which make it possible, as explained below, to obtain a set of colours that is optimized, primarily with regard to colour precision, but also with regard to ink consumption.

The present invention is thus particularly well suited to printing a reference pattern comprising a limited number of different colours that are to be reproduced exactly, as is the case in particular for printing identification patterns of an airline on an aircraft.

In a first embodiment, the selection step uses, as a selection criterion, what is referred to as a precision criterion that reflects the precision of the livery obtained by a set of colours with respect to the reference pattern, and the selection step comprises:
- a sub-step for determining a value of the precision criterion for each of the sets of colours defined in the definition step; and
- a sub-step for comparing the values of the precision criterion of each of said sets of colours with one another, and for selecting the set of colours whose precision criterion value reflects the best precision.

Moreover, in a second embodiment, in addition to or as a variant of the first embodiment, the selection step uses, as a selection criterion, what is referred to as a consumption criterion that reflects ink consumption (in terms of overall volume, in terms of overall cost, in terms of volume or in terms of cost of certain inks, etc.) with regard to each of said sets of colours defined in the definition step, for printing the reference pattern, and comprises:
- a sub-step for determining a value of the consumption criterion for each of the sets of colours defined in the definition step; and
- a sub-step for comparing the values of the consumption criterion of each of said sets of colours with one another, and for selecting the set of colours whose consumption criterion value reflects the lowest consumption.

Moreover, advantageously, the determination step comprises the following sub-steps for determining a spot colour for each selected sensitive colour:
- a sub-step for preparing multiple inks of different colours, referred to as test colours, each time from a mixture of available inks, having colours close to the sensitive colour under consideration;
- a sub-step for measuring a value of a colour difference parameter (preferably deltaE, as explained below) of each of these test colours of the prepared inks, with respect to the sensitive colour; and
- a selection sub-step for selecting the test colour having the lowest colour difference parameter value as spot colour.

Furthermore, in one particular embodiment, at least one spot colour of the set of colours is taken into consideration in the set of colours to also be used as a process colour.

Moreover, advantageously, the method comprises a reception step, prior to the analysis step, in which the computer device receives the colorimetric data of the reference pattern to be printed.

In addition, advantageously, the elementary colours comprise at least some of the following colours:
- primary colours: cyan, magenta, yellow;
- secondary colours: orange, green, purple;
- black.

The present invention also relates to a printing method for printing a reference pattern on an object, using a printing system comprising at least one printing tool using N inks.

According to the invention, the printing tool uses, as N inks, respectively, the N inks selected beforehand using the abovementioned method.

The present invention furthermore relates to a system for determining an optimized set of N different ink colours that are intended to be used to print at least one pattern, referred to as a reference pattern, on an object.

According to the invention, said system comprises at least:
- a computer device configured at least:
   - to analyse colorimetric data relating to the reference pattern to be printed, in order to identify a set of colours to be printed;
   - to define a plurality of sets of colours, each of said sets of colours comprising N different colours consisting of M spot colours and N-M colours referred to as elementary colours, at least the N-M elementary colours being intended to be used as process colours; and
   - to select one of said sets of colours taking into account at least one selection criterion, the set of colours thus selected representing said determined optimized set; and
- a set of devices configured at least to determine, for each of a plurality of identified colours, referred to as sensitive colours, what is referred to as a spot colour intended to reproduce the sensitive colour.

### Brief description of the figures

The appended figures will make it easy to understand how the invention may be implemented. In these figures, identical reference signs denote similar elements.
Figure 1 is a block diagram of a method for determining an optimized set of different ink colours that are intended to be used to print at least one reference pattern on an object.
Figure 2 schematically shows a system configured to implement the method of Figure 1.
Figure 3 is a block diagram of one example of a printing system able to carry out direct-to-shape printing, using the optimized set determined by the method of Figure 1.
Figure 4 schematically shows a colour space showing the colours of the reference pattern to be printed.
Figure 5 illustrates part of the colour space from Figure 4, showing a sensitive colour and multiple corresponding test colours.

### Detailed description

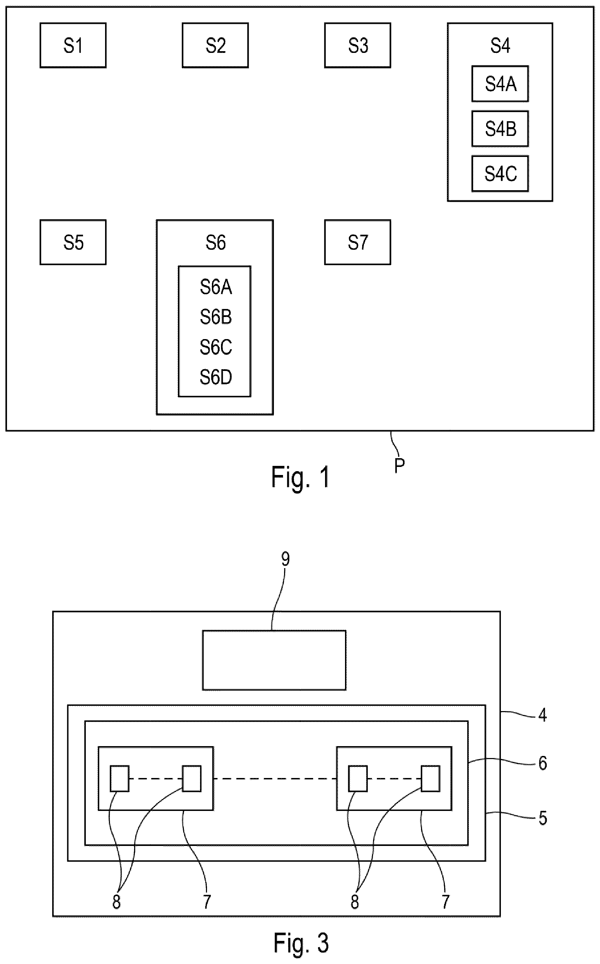

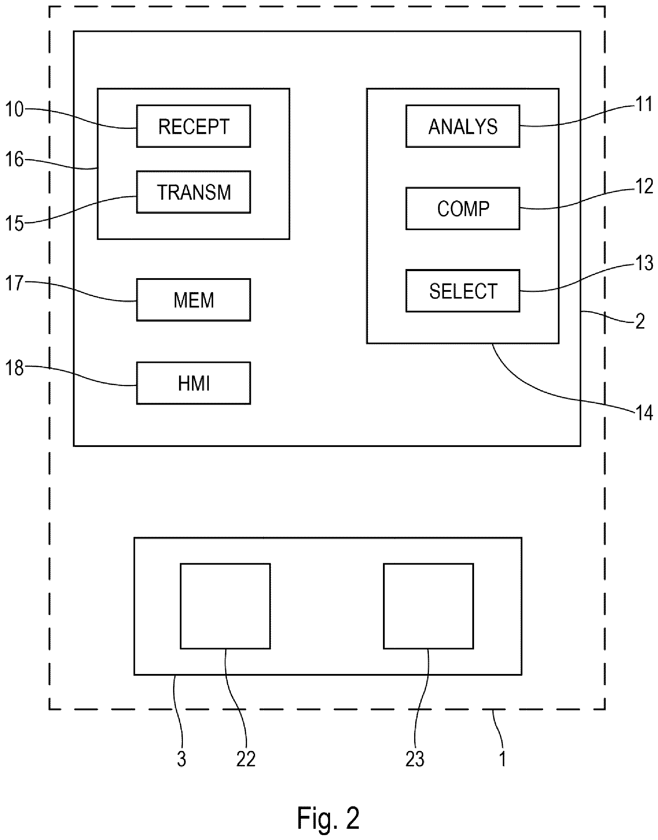

In the context of the present invention, a method P (for example such as the one shown in one particular embodiment in Figure 1) able to be implemented by a system 1 (for example such as the one shown in one particular embodiment in Figure 2) is intended to determine an optimized set of inks of different colours, which will be used to print at least one given pattern (referred to as a reference pattern) on an object.

This reference pattern corresponds to a colour representation that is intended to be printed on the object and that comprises for example images, texts, logos, artistic drawings, etc. This reference pattern may correspond to the whole representation to be printed on the object or to only part of this representation. In the latter case, the whole representation may comprise multiple reference patterns, each of which is printed on part of the object.

In the context of the present invention, an "object" is understood to mean any apparatus, machine or other mechanical element or part of such an apparatus, machine or other mechanical element a surface or part of a surface of which is able to receive such printing. It may in particular be the fuselage of an aircraft on which characteristic signs (logos, colours, etc.) of the airline that will operate the aircraft will be printed.

The set of colours (inks), determined by the system 1 by implementing the method P, will preferably be used when implementing direct-to-shape (DTS) printing, which is a printing technology that makes it possible to carry out printing directly on the three-dimensional surface of an object, regardless of its shape or texture.

Direct-to-shape printing may be implemented using a printing system 4, for example such as the one shown schematically in Figure 3, which comprises at least one robot 5. The robot 5 may be configured to carry out any type of movement (linear movement, rotary movement, complex articulation, etc.) and may correspond for example to a robotic arm or a Cartesian gantry. The robot 5 comprises a printing tool 6 (printing end-effector) at a free end. This printing tool 6 is provided with a plurality of N print heads 7, for example with six print heads, each of which comprises an ink of a different colour. Each of these print heads 7 is in particular equipped with a plurality of nozzles 8 for projecting drops of ink on demand.

The printing tool 6 uses, as N inks, respectively, the N inks selected beforehand using the method P. The printing system 4 also comprises a control unit 9 intended in particular to control the movement of the robot 5 and the printing operations carried out by the printing tool 6.

Moreover, the system 1 comprises in particular, as shown in Figure 2, a computer device 2 enabling operations to be carried out automatically and a set of devices 3 enabling an operator to carry out various actions, as explained below.

The method P implemented by the system 1 therefore aims to determine an optimized set of N colours (inks).

To this end, said method P comprises, as shown in Figure 1, in particular the following steps, implemented by the system 1:
- a reception step S1, implemented by a reception unit 10 (RECEPT) of the computer device 2 (Figure 2), for receiving at least colorimetric data relating to the reference pattern to be printed;
- an analysis step S2, implemented by an analysis unit 11 (ANALYS) of the computer device 2, for analysing colorimetric data relating to the reference pattern to be printed, in order to identify a set of colours to be printed;
- an identification step S3 enabling an operator to identify, among this set of colours, a number M of what are referred to as sensitive colours, M being an integer greater than or equal to 1;
- a determination step S4 enabling an operator to determine, using the set of devices 3, for each identified sensitive colour, what is referred to as a spot colour intended to reproduce the sensitive colour, each spot colour thus determined being entered into the computer device 2;
- a definition step S5, implemented by a computing unit 12 (COMP) of the computer device 2, for defining a plurality of sets of colours, each of said sets of colours comprising N different colours consisting of said M spot colours and N-M colours referred to as elementary colours, at least the N-M elementary colours being intended to be used as process colours;
- a selection step S6, implemented by a selection unit 13 (SELECT) of the computer device 2, for selecting one of said sets of colours (defined in the definition step S5) taking into account at least one selection criterion. The set of colours thus selected represents said optimized set determined by the method P; and
- a transmission step S7, implemented by a transmission unit 15 (TRANSM) of the computer device 2, for transmitting the optimized set to a user device (not shown), for example a computer, which may form part of the set of devices 3.

The various steps of the method P will now be described in more detail.

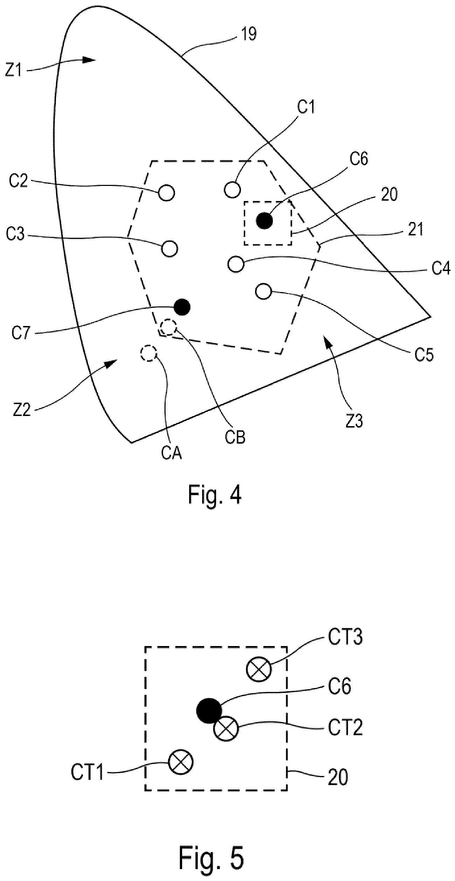

In the reception step S1, the computer device 2 receives the colorimetric data of the reference pattern to be printed, for example by way of a file containing these colorimetric data, which is loaded into the computer device 2. These colorimetric data may be stored in a memory 17 (MEM) of the computer device 2 (Figure 2). These colorimetric data comprise references of the various colours present in the reference pattern. Preferably, these references represent coordinates of these colours in a colour space, such as the colour space 19 shown highly schematically in Figure 4.

A colour space, for example the CIELAB colour space, is a three-dimensional mathematical model representing all colours able to be perceived, used or reproduced by a human being or a device. Each colour that it contains is thus associated with coordinates (in the colour space) defining a precise point.

The colour space 19 shown in Figure 4 comprises various areas where one colour is predominant each time. To simplify the drawing, only zones Z1, Z2 and Z3 where certain colours are predominant, for example green, blue and red, respectively, have been localized.

In the following analysis step S2, the analysis unit 11 of the computer device 2 analyses the colorimetric data relating to the reference pattern to be printed, as received in reception step S1, in order to identify a set of colours to be printed. More precisely, the analysis unit 11 identifies the various colours contained in the reference pattern and that are to be printed in order that the livery that is obtained reproduces this reference pattern as exactly as possible.

By way of illustration, the location of the various colours C1 to C7 that are present in the reference pattern and that have been identified by the analysis unit 11 is shown in the colour space 19 of Figure 4.

The set of colours C1 to C7 thus identified by the computer device 2 is provided to an operator, for example by being displayed on a screen of the computer device 2, by being stored on a removable memory, by being printed or being transmitted to a user device (not shown), for example a computer, of the operator.

This set of colours comprises a number L of colours. Thus, in the case of simple printing requiring few colours, the number L may be a small number, for example less than 20. On the other hand, in the case of complex printing, for example of a highly realistic photo requiring a wide range of colours, the number L may be very high.

An operator who has taken note of this set of colours C1 to C7 identifies, in the identification step S3, a number M of what are referred to as sensitive colours in this set of colours. As indicated above, a sensitive colour is a colour of the reference pattern that is to be reproduced precisely in the livery. In the case of printing on an aircraft, this may be a colour characteristic of the airline that will operate the aircraft.

M (the number of sensitive colours) is an integer greater than or equal to 1 and less than or equal to N (the number of inks of different colours that may be used to print the reference pattern). Preferably, N is greater than or equal to 4 and less than or equal to 10. In one particular embodiment, if N is equal to 6, M is equal to 1, 2 or 3.

In the (illustrative and non-limiting) example of Figure 4, out of the seven colours C1 to C7 identified in the reference pattern, two colours C6 and C7 (represented by a black circle) are identified as being sensitive colours.

In the following determination step S4, an operator determines, using the set of devices 3, for each identified sensitive colour C6, C7, a spot colour, that is to say a colour generated by an ink (which is pure or obtained from a mixture or possibly pure) that is printed in a single pass of the printing tool 6 (Figure 3) and that is to reproduce the corresponding sensitive colour C6, C7 exactly.

To this end, the determination step S4 comprises at least the sequence of the following sub-steps, implemented for each identified sensitive colour C6, C7:
- a sub-step S4A for preparing multiple inks of different colours, referred to as test colours CTi. Each ink having a given test colour CTi is prepared from a mixture of available inks, having colours close to the sensitive colour C6, C7 under consideration;
- a sub-step S4B for measuring a colour difference parameter (preferably deltaE, as explained below) of each of these test colours CTi of the prepared inks, with respect to the sensitive colour C6, C7 under consideration; and
- a sub-step S4C for selecting the test colour CTi having the lowest colour difference parameter value as spot colour.

In sub-step S4A, an operator prepares inks of different colours, each of which has a particular colour (corresponding to a test colour CTi). To this end, they use a conventional device 22 (forming part of the set of devices 3 (Figure 2)) to produce this type of ink mixture, and they use inks from among those available. For each test ink, a particular mixture of certain inks (from among these available inks) is produced. Generally speaking, the mixture is thus produced from a plurality of inks of different colours, using given mass percentages for each of the inks used.

However, in one highly specific case, if there is an ink having a colour very close to the sensitive colour, it is possible to use this "pure" ink directly (without mixing it with other inks), the colour of this "pure" ink representing the test colour CTi in this case.

In sub-step S4B, a colour difference parameter with respect to the sensitive colour C6, C7 is determined using measurements carried out by way of a colorimetric device 23 (Figure 2), such as a spectrophotometer or colorimeter, for each of the test colours CTi.

Preferably, this colour difference parameter represents a parameter referred to as deltaE (or ΔE), which is obtained from measurements carried out using the colorimetry device 23. A deltaE value represents information about the difference between two colours in a given colour space.

To this end, in sub-step S4B, the following operations are carried out, for each test colour CTi:
- measuring the test colour CTi of a sample of the ink, using the colorimetry device 23. To this end, as is conventional, the ink (having the test colour under consideration) is deposited on a printing medium, preferably a plate having a colour and a material similar to those of the object on which the printing will be carried out, and the colorimetry device 23 is brought above this printing medium and carries out a measurement. This measurement makes it possible to determine the coordinates of the test colour in the colour space described above;
- calculating the differences between the coordinates, in this colour space, of the test colour CTi and of the corresponding sensitive colour C6, C7. The coordinates of the sensitive colour C6, C7, in the colour space, were determined beforehand, in the analysis step S2; and
- calculating deltaE (*ΔE*) from the differences between the coordinates of the test colour CTi and of the sensitive colour C6, C7, using a conventional and known mathematical formula, for example the following formula: $ΔE {∗}_{76} = \sqrt{{\left({L}_{2}∗-{L}_{1}∗\right)}^{2} + {\left({a}_{2}∗-{a}_{1}∗\right)}^{2} + {\left({b}_{2}∗-{b}_{1}∗\right)}^{2}}$ where *L*₁ **, a*₁ * *and b*₁ * are the coordinates, in the colour space, of the first colour to be compared and *L*₂ * *, a*₂ * *and b*₂ * are those of the second colour.

The test colour ultimately selected in sub-step S4C from among those specified in sub-step S4A is the test colour whose deltaE (with respect to the sensitive colour C6, C7 under consideration) is the lowest, namely the one closest to the sensitive colour C6, C7.

Figure 5 shows part 20 of the colour space 19 from Figure 4 around the sensitive colour C6 of the reference pattern. The test colours CT1, CT2 and CT3 have been localized in this part 20 (at the coordinates measured in sub-step S4B). In this example, the test colour CT2 is the colour closest to the sensitive colour C2. This test colour CT2 is therefore selected as spot colour.

In one variant embodiment, the determination step S4 (that is to say the sequence of sub-steps S4A, S4B and S4C) is reiterated if the lowest deltaE remains greater than a predetermined value, for example 2. In this variant, the determination step S4 (that is to say the sequence of sub-steps S4A, S4B and S4C) is reiterated until the deltaE becomes less than or equal to said predetermined value.

The operator enters the one or more spot colours thus determined into the computer device 2, for example using a conventional data entry unit, which forms part of a human-machine interface (HMI) 18 of the computer device 2 (Figure 2).

Next, the computing unit 12 of the computer device 2 defines a plurality of sets of colours in the definition step S5.

Each of these sets of colours comprises N different colours. More precisely, each of these sets of colours comprises the M spot colours determined beforehand, such as the colour CT2, along with N-M colours referred to as elementary colours. The N-M elementary colours are intended to be used as process colours.

In one preferred embodiment, the elementary colours comprise at least some of the following colours:
- primary colours: cyan, magenta, yellow;
- secondary colours: orange, green, purple;
- black.

Furthermore, in one particular embodiment, one, several or all of the M spot colours may be taken into consideration in the set of colours to also be used, in addition to usual use as a spot colour (that is to say to print a colour in a single pass of the printing tool), as a process colour, that is to say they may be combined with one or more of the other process colours so as to form a given colour (via printing series of dots of these different process colours).

This particular embodiment, by making it possible to have a greater number of process colours, makes it possible to increase colour combination options and thus the possibility of reproducing the colours of the reference pattern exactly.

Next, the selection unit 13 of the computer device 2 selects, in the selection step S6, one of the sets of colours (defined in the definition step S5), taking into account at least one selection criterion, as explained below.

The set of colours that is selected by the selection unit 13 represents the optimized set of colours, as determined by the method P.

In a first embodiment, the selection unit 13 uses, as a selection criterion, what is referred to as a precision criterion that reflects the precision of the livery obtained by a set of colours with respect to the reference pattern.

In this first embodiment, the selection step S6 comprises:
- a sub-step S6A for determining a value of the precision criterion for each of the sets of colours defined in the definition step S5; and
- a sub-step S6B for comparing the values of the precision criterion of each of said sets of colours with one another, and for selecting the set of colours whose precision criterion value reflects the best precision.

The precision criterion is formed so as to be able to determine the best precision between the livery obtained by a set of colours and the reference pattern. To this end, for each of the sets of colours, the values of a colour difference parameter (preferably the values of deltaE) are determined for all of the colours of this set of colours. Thus, in one particular embodiment, the precision criterion of a first set takes into account the values of the deltaE of the various colours of this set (with respect to the colours of the reference pattern that they are to reproduce); similarly, the precision criterion of a second set takes into account the values of the deltaE of the various colours of this second set, and so on.

In sub-step S6B, the selection unit 13 compares the values of the precision criterion of all of the sets of colours under consideration with one another, and selects the set of colours whose precision criterion value reflects the best precision.

Furthermore, in a second embodiment, the selection step S6 uses, as a selection criterion, what is referred to as a consumption criterion that reflects the consumption of ink used, for each of the sets of colours defined in the definition step S5, to print the reference pattern.

The consumption criterion may represent the total volume of ink used by the N print heads (for the set of colours under consideration) to print the reference pattern on the object.

As a variant, the consumption criterion may represent the overall financial cost of the various inks used (for the set of colours under consideration), some inks possibly being more expensive than others.

In another variant, the consumption cost may represent the volume or financial cost of only some of the inks in the set of colours.

In this second embodiment, the selection step S6 comprises:
- a sub-step S6C for determining a value of the consumption criterion for each of the sets of colours defined in the definition step S5; and
- a sub-step S6D for comparing the values of the consumption criterion of each of said sets of colours with one another and for selecting the set of colours whose consumption criterion value reflects the lowest consumption, for example in terms of ink volume and/or financial cost.

Moreover, in a third embodiment, the selection unit 13 uses the above two criteria, namely the precision criterion and the consumption criterion.

Finally, the set of colours (which is selected by the selection unit 13 and which represents the optimized set of colours as determined by the method P) is provided to an operator, for example by being displayed on a screen (of the human-machine interface 18 of the computer device 2), by being stored on a removable memory, by being printed or being transmitted to a user device (not shown), for example a computer, of the operator.

In one particular embodiment of the computer device 2:
- the analysis unit 11, the computing unit 12 and the selection unit 13 form part of a data processing unit 14; and
- the reception unit 10 and the transmission unit 15 form part of a conventional communication system 16 enabling the computer device 2 to communicate with devices external to the computer device 2, via a wired or non-wired link.

The various elements and/or units of the computer device 2 may correspond to any type of processor able to implement the corresponding processing and computing operations.

Figure 4 shows, in the colour space 19, a reduced colour space 21 that represents the colour space able to be obtained by the colours of the optimized set of colours as determined by the method P. In one particular case, if a colour, such as the colour CA in Figure 4, of the reference pattern cannot be obtained with the set of colours, the colour closest in the colour space 21 defined by this set of colours is printed, namely the colour CB in this particular example of Figure 4.

The method P and the system 1 as described above thus have numerous advantages. In particular, they make it possible:
- to maximize the precision of the colours, that is to say they make it possible to obtain precisely the desired colours in the livery; and
- to minimize (or at the very least reduce) ink consumption.

The method P and the system 1 also have the following advantages:
- no masking required for printing;
- extensive customization;
- reducing delays;
- largely automatic and repeatable implementation for new objects, for example new aircraft, with new patterns to be reproduced; and
- less dependence on ink suppliers (by producing ink mixtures).

## Claims

1. Method for determining an optimized set of N different ink colours that are intended to be used to print at least one pattern, referred to as a reference pattern, on an object,
**characterized in that** it comprises at least the sequence of the following steps:
- an analysis step (S2), implemented by a computer device (2), for analysing colorimetric data relating to the reference pattern to be printed, in order to identify a set of colours (C1 to C7) to be printed;
- an identification step (S3) for identifying, among this set of colours (C1 to C7), a number M of what are referred to as sensitive colours (C6, C7), M being an integer greater than or equal to 1;
- a determination step (S4) for determining, for each identified sensitive colour (C6, C7), what is referred to as a spot colour intended to reproduce the sensitive colour (C6, C7), and for entering each spot colour thus determined into the computer device (2);
- a definition step (S5), implemented by the computer device (2), for defining a plurality of sets of colours, each of said sets of colours comprising N different colours consisting of said M spot colours and N-M colours referred to as elementary colours, at least the N-M elementary colours being intended to be used as process colours; and
- a selection step (S6), implemented by the computer device (2), for selecting one of said sets of colours taking into account at least one selection criterion, the set of colours thus selected representing said determined optimized set.

2. Method according to Claim 1,
**characterized in that** the selection step (S6) uses, as a selection criterion, what is referred to as a precision criterion that reflects the precision of the livery obtained by a set of colours with respect to the reference pattern, and the selection step (S6) comprises:
- a sub-step (S6A) for determining a value of the precision criterion for each of said sets of colours defined in the definition step (S5); and
- a sub-step (S6B) for comparing the values of the precision criterion of each of said sets of colours with one another, and for selecting the set of colours whose precision criterion value reflects the best precision.

3. Method according to either of Claims 1 and 2,
**characterized in that** the selection step (S6) uses, as a selection criterion, what is referred to as a consumption criterion that reflects ink consumption with regard to each of the sets of colours defined in the definition step (S5), to print the reference pattern, said selection step comprising:
- a sub-step (S6C) for determining a value of the consumption criterion for each of said sets of colours defined in the definition step (S5); and
- a sub-step (S6D) for comparing the values of the consumption criterion of each of said sets of colours with one another, and for selecting the set of colours whose consumption criterion value reflects the lowest consumption.

4. Method according to any one of the preceding claims,
**characterized in that** the determination step (S4) comprises the following sub-steps for determining a spot colour for each selected sensitive colour (C6, C7):
- a sub-step (S4A) for preparing multiple inks of different colours, referred to as test colours, each time from a mixture of available inks, having colours close to the sensitive colour (C6, C7) under consideration;
- a sub-step (S4B) for measuring a value of a colour difference parameter of each of these test colours of the prepared inks, with respect to the sensitive colour (C6, C7); and
- a selection sub-step (S4C) for selecting the test colour having the lowest colour difference parameter value as spot colour.

5. Method according to Claim 4,
**characterized in that** the colour difference parameter is deltaE.

6. Method according to any one of the preceding claims,
**characterized in that** at least one spot colour of the set of colours is taken into consideration in the set of colours to also be used as a process colour.

7. Method according to any one of the preceding claims,
**characterized in that** it comprises a reception step (S1), prior to the analysis step (S2), in which the computer device (2) receives the colorimetric data of the reference pattern to be printed.

8. Method according to any one of the preceding claims,
**characterized in that** the elementary colours comprise at least some of the following colours:
- primary colours: cyan, magenta, yellow;
- secondary colours: orange, green, purple;
- black.

9. Printing method for printing a reference pattern on an object, using a printing system (4) comprising at least one printing tool (6) using N inks, **characterized in that** the printing tool (6) uses, as N inks, respectively, the N inks selected beforehand using a method (P) according to any one of Claims 1 to 8.

10. System for determining an optimized set of N different ink colours that are intended to be used to print at least one pattern, referred to as a reference pattern, on an object,
**characterized in that** it comprises at least:
- a computer device (2) configured at least:
• to analyse colorimetric data relating to the reference pattern to be printed, in order to identify a set of colours (C1 to C7) to be printed;
• to define a plurality of sets of colours, each of said sets of colours comprising N different colours consisting of M spot colours and N-M colours referred to as elementary colours, at least the N-M elementary colours being intended to be used as process colours; and
• to select one of said sets of colours taking into account at least one selection criterion, the set of colours thus selected representing said determined optimized set; and
- a set of devices (3) configured at least to determine, for each of a plurality of identified colours, referred to as sensitive colours (C6, C7), what is referred to as a spot colour intended to reproduce the sensitive colour.
